# EUROPEAN PATENT APPLICATION

(11) **EP 4 738 655 A1**
(43) Date of publication of application: **06.05.2026**
(21) Application number: 24210386.9
(22) Date of filing: 01.11.2024
(51) Int. Cl.: H02K 1/20, H02K 9/19, H02K 5/20

(54) **ELECTRIC MOTOR AND VEHICLE COMPRISING THE ELECTRIC MOTOR**

(71) Applicant: Traton AB, 151 87 Södertälje (SE)
(72) Inventor: AFRIDI, Usman, 152 31 Södertälje (SE); BIRKESTAD, Per, 120 63 Stockholm (SE); NESS, Christian, 155 92 Nykvarn (SE); ENGSTRÖM, Jörgen, 147 71 Grödinge (SE); LANDEMOO, Viktor, 141 51 Huddinge (SE)
(74) Representative: Traton AB

(57) **Abstract**

An electric motor (1) comprising a rotor (2) rotatably arranged about a central axis (A) of the electric motor (1) and a stator (3) coaxial with the rotor (2). The stator (3) comprises a stator core (4) having a radially outer surface (10) comprising a plurality of ribs (8, 8') distributed circumferentially and extending longitudinally between axial ends (4a, 4b) of the stator core (4). The electric motor (1) further comprises a housing (12) arranged radially outside the stator (3) such that a substantially annular gap (14) is formed between the outer surface (10) of the stator core (4) and an inner wall of the housing (12). Moreover, the electric motor (1) comprises a cooling system (20) configured to create a circumferential flow (F) of a cooling liquid in the substantially annular gap (14). A vehicle (100) comprising the electric motor (1) is also disclosed.

## Description

### TECHNICAL FIELD

The present disclosure relates in general to an electric motor. The present disclosure further relates in general to a vehicle comprising the electric motor.

### BACKGROUND

The ongoing electrification of vehicles, in particular heavy-duty or medium-duty vehicles, has led to demands for electric motors with higher power densities.

Electric motors comprise a rotor and a stator, which in turn comprises a stator core and windings. To reduce energy losses and improve efficiency, the stator core is typically formed of a large number of thin laminated sheets (typically having a sheet thickness of about 0.2-0.5 mm) that are stacked together in the axial direction of the stator core. These thin sheets are typically stamped or laser cut from a steel sheet in a shaped desired for the stator core, and thereafter stacked next to each other to build up the stator core in the axial direction thereof.

Increasing power density requirements for electric motors necessitate enhanced cooling efficiency to allow meeting the demand. Electric motors generate heat, for example due to electrical losses in windings, core losses (resulting from hysteresis and eddy currents), and mechanical friction. Efficient cooling of electric motors is therefore essential, for example, to prevent overheating and avoid efficiency drops. More specifically, the lifespan and efficiency of an electric motor is constrained by temperature of the hot spots, which may often be located within a mid-stack region of the stator core.

An electric motor may be cooled in several ways, using various types of cooling media. For example, an electric motor may be cooled by force air cooling. Forced air cooling is a simple and cost effective solution but is typically not sufficient for high-power applications, such as in heavy-duty vehicles. Another example is water cooling in which the coolant circulates through channels around or within the electric motor and transfers the heat to a heat exchanger, where it typically is cooled down by air. Water cooling is significantly more efficient than forced air cooling, but is a considerably more complex alternative. Water cooling may for example be achieved by using a water jacket that surrounds the housing of the electric motor. Yet another example is oil cooling. Oil cooling is particularly effective because oil has a higher heat capacity than air or water, and is therefore often desired for electrical motors intended to be used in, for example, heavy-duty vehicles. Oil cooling may for example be achieved through arranging various oil channels inside the electric motor, such as axial oil channels in the stator and/or the rotor, to further improve heat dissipation from the electric motor.

### SUMMARY

The object of the present invention is to improve cooling capacity of an electric motor to, for example, enable meeting increasing power density demands.

The object is achieved by the subject-matter of the appended independent claim(s).

The present disclosure relates to an electric motor having a central axis. The electric motor comprises a rotor rotatably arranged about the central axis. The electric motor further comprises a stator coaxial with the rotor, the stator comprising a stator core having a radially outer surface comprising a plurality of ribs distributed circumferentially and extending longitudinally between axial ends of the stator core. The electric motor also comprises a housing arranged radially outside the stator such that a substantially annular gap is formed between the outer surface of the stator core and an inner wall of the housing. Furthermore, the electric motor comprises a cooling system configured to create a circumferential flow of a cooling liquid in the substantially annular gap.

In the electric motor according to the present disclosure, direct cooling of the stator core may be achieved by means of a flow of cooling liquid in direct contact with the radially outer surface of the stator core. Furthermore, cooling capacity of the stator core, and thus also of the electric motor as such, is improved by the combination of the presence of a plurality of ribs, extending longitudinally between axial ends of the stator core, with a circumferential flow of cooling liquid. The plurality of ribs increase the surface area of the radially outer surface of the stator core and thus also the possible heat transfer surface between the stator core and the cooling liquid flowing outside of the stator core. A circumferential flow of cooling liquid, as created by the cooling system, leads to an efficient cooling of the most critical regions of the stator core (typically in the mid-stack region) as well as a consistent cooling effect across the stator core outer surface. Furthermore, for typical design dimensions of today's electrical motors for vehicles (which often have a considerably greater circumference of the stator core compared to the axial extension of the stator core), a circumferential flow of the cooling liquid has the advantage of increasing the cooling capacity compared to, for example, an axial flow of cooling liquid. The reason therefore is that, for a given size of the annular gap and given volume flow of cooling liquid, the bulk velocity of the cooling liquid will be higher in case of a circumferential flow compared to an axial flow. Moreover, and perhaps more importantly, the fact that the cooling liquid will flow over and substantially perpendicular to the longitudinal extension of the ribs leads to an increase of the thermal energy transfer within the cooling liquid. This is due to an increase of the thermal flow within the cooling liquid as the temperature gradients within the cooling liquid will increase as a rib is passed due to increased mixing. Described differently, mixing within the cooling liquid is increased compared to, for example, if the ribs would extend longitudinally substantially in the same direction as the flow direction of the cooling liquid.

Moreover, a circumferential flow may lead to a well-distributed flow of cooling liquid and low pressure drop, which in turn leads to lower pump work needed by the cooling system and thereby increased overall energy efficiency of the electric motor.

Furthermore, the improved cooling capacity is achieved without significantly affecting the production costs for the stator core since the design comprising the plurality of ribs may easily be achieved during stamping or laser cutting of the individual laminations of the stator core.

Suitably, each of the plurality of ribs may have a cross section, perpendicular to the central axis, that is tapered. Thereby, better flow dynamics of the cooling liquid may be achieved. Moreover, a tapered cross section of the ribs facilitates flushing of the possible air bubbles that may be introduced by the cooling liquid used by the cooling system. This in turn reduces the risk for entrapment of such air bubbles, which may otherwise negatively affect cooling efficiency. It also has the advantage of, compared to for example plate-like fins, a more equal temperature distribution over the outer surface of the stator core in view of a wider base of each rib.

The above mentioned tapered cross section may comprise angled flanks connected via a rounded tip. This further improves the flow of cooling liquid over the ribs and facilitates flushing of possible air bubbles.

Each of the plurality of ribs may have a downstream flank and an upstream flank, relative to the circumferential flow of cooling liquid, wherein said upstream flank is angled with an angle of from 20° to 60°, relative to a stator core radius at an outermost part of a tip of the rib. This further improves the circumferential flow of cooling liquid over the ribs. Preferably, the upstream flank may be angled with an angle of from 25° to 45° relative to the stator core radius at the outermost part of the tip of the rib.

Each of the plurality of ribs may have a cross section, perpendicular to the central axis, which is symmetric about a radius of the stator. This may facilitate production of the stator core as well as the electric motor. For example, this allows for stacking of the stator laminations without having to consider their relative orientation with regard to direction of the circumferential flow of cooling liquid.

A distance between the tips of two adjacently arranged ribs (of said plurality of ribs) may suitably be from 1 to 3 times a width of a base of each of said two adjacently arranged ribs. This further contributes to the increase in surface area of the radially outer surface of the stator core and thus also in the heat transfer surface area.

Each of the plurality of ribs may suitably have a rounded tip having a radius of curvature that is from 0.4 to 0.8 times the radial height of said rib. This further facilitates the circumferential flow of cooling liquid over the ribs. Preferably, said radius of curvature may be from 0.5 to 0.7 times the radial height of said rib.

A ratio of radial height of each of the plurality of ribs to a maximum radial distance between the outer surface of the stator core and the inner wall of the housing may for example be from 0.4 to 0.7. This further improves the cooling capacity without unduly increasing the pump work needed to achieve a desired flow rate of the cooling liquid. Preferably, the ratio of radial height of each of the plurality of ribs to maximum radial distance between the outer surface and the stator core and the inner wall of the housing may be from 0.50 to 0.65.

According to a first alternative, each of the plurality of ribs may extend longitudinally in parallel with the central axis. Among other things, this facilitates production of the stator core, for example since a common stamping tool may be used for stamping each of the laminates irrespectively of their intended position within the stack.

According to a second alternative, the plurality of ribs may be helical ribs having a helix angle of equal to or less than 20 degrees. Helical ribs have the advantage of increasing the heat transfer surface compared to ribs extending parallel to the central axis, and may therefore further improve the cooling efficiency of the stator core. However, the helix angle should not be too large as this may possibly negatively influence the flow dynamics of the cooling liquid. Preferably, the helical ribs may have a helix angle of equal to or less than 10 degrees.

The above described cooling system may be configured to create a circumferential flow in a substantially counter-gravity direction. Among other things, this allows an efficient removal of potential air bubbles which may otherwise negatively affect the cooling efficiency. It also has the advantage of allowing an easier control of the flow of cooling liquid.

Furthermore, the outer surface of the stator core may, in addition to the plurality of ribs, further comprise a plurality of surface features configured to increase a surface area of the outer surface of the stator core. This may allow for further increasing the heat transfer surface and thereby further improve cooling efficiency of the electric motor.

The present disclosure further relates to a vehicle comprising the electric motor as described herein. The vehicle may be a land-based heavy-duty vehicle, such as a bus or a truck, but is not limited thereto. The vehicle may be a hybrid vehicle, or a fully electric vehicle without departing from the scope of the present disclosure.

### BRIEF DESCRIPTION OF DRAWINGS

- Fig. 1: schematically illustrates a cross sectional view, perpendicular to a central axis, of one exemplifying embodiment of the herein described electric motor,
- Fig. 2: illustrates a perspective view of the stator core of the electric motor shown in Fig. 1,
- Fig. 3: illustrates a perspective view of a portion of a radially outer surface of a stator core according to a second exemplifying embodiment of the herein described electrical motor,
- Fig. 4: illustrates an exemplifying cross section, as seen perpendicular to the central axis, of a rib of a radially outer surface of a stator core of the herein described electric motor,
- Fig. 5: illustrates a perspective view of a stator core according to a third exemplifying embodiment of the herein described electrical motor,
- Fig. 6: schematically illustrates an example of a vehicle comprising the herein described electric motor.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The present disclosure relates to an electric motor. The electric motor comprises a rotor which is rotatably arranged about a central axis of the electric motor. The electric motor further comprises a stator coaxial with the rotor and arranged radially outside of the rotor. The stator comprises a stator core and stator windings. The stator core may typically be formed of a plurality of stator core laminations, as known in the art.

The stator core of the herein described electric motor has a radially outer surface (which may alternatively be referred to as a radially outer surface of the stator back) comprising a plurality of ribs. It should here be noted that the term "radially outer surface" is intended to refer to the position of said surface in relation to the central axis of the electric motor, and that the radius of the stator core may vary along the circumference of the stator core not only due to the presence of the plurality ribs. More specifically, the stator core may have a cross section, perpendicular to the central axis, in which the circumferential outer surface may or may not have a substantially circular configuration. The plurality of ribs are distributed circumferentially over the radially outer surface of the stator core and extend longitudinally between the axial ends of the stator core. The plurality of ribs are configured to increase the surface area of the outer surface of the stator core (as compared to a smooth and uniform outer surface of a stator core).

The electric motor further comprises a housing arranged radially outside the stator such that a substantially annular gap is formed between the outer surface of the stator core and an inner wall of the housing. A substantially annular gap is here considered to mean a circumferential gap which extends around the whole outer circumference of the stator, except when interrupted by possible mounting features, configured for mounting the stator to the housing, that may be present in such a gap . Suitably, said substantially annular gap also extends along the full axial extension of the stator core, except for the possible mounting features. In case said mounting features are not present so as to extend in the gap, mounting features configured to mount the stator to the housing may for example be arranged so as to mount the stator, at its axial ends, to the housing.

Moreover, the herein described electric motor comprises a cooling system configured to create a circumferential flow of a cooling liquid in the substantially annular gap present between the housing and the outer surface of the stator core. Thus, the cooling system is configured to cool the outer surface of the stator core through creating a flow of cooling liquid in a circumferential direction of the stator core. The cooling liquid may suitably be oil. This is because oil has a higher heat capacity than other cooling liquids. The cooling system may typically comprise a pump configured to pressurize the cooling liquid for the purpose of creating and controlling the intended flow of the cooling liquid.

As previously mentioned, the plurality of ribs extend longitudinally between the axial ends of the stator core. Moreover, the cooling system is configured to create a circumferential flow of cooling liquid over the radially outer surface of the stator core. More specifically, the cooling system is configured to create a cooling liquid flow over, and in a direction substantially perpendicular to the longitudinal extension of, the respective ribs. Thus, the plurality of ribs may according to one alternative extend longitudinally in parallel with the central axis of the electric motor. Alternatively, the plurality of ribs may be slightly helically arranged. In other words, the plurality of ribs may be helical ribs. In such a case, the helical ribs may suitably have a helix angle of equal to or less than 20 degrees. The helix angle is the angle between the longitudinal extension of the helical rib and a line parallel to the central axis of the electric motor. Preferably, the helical ribs may have a helix angle of equal to or less than 10 degrees. Helical ribs have the advantage of increasing the surface area of the radially outer surface of the stator core.

However, a stator core having ribs extending in parallel with the central axis may typically be more easily produced and provides a lower risk for deviations in production results.

The plurality of ribs may suitably have a cross section, perpendicular to the central axis, which is tapered. More specifically, the cross section may be tapered outwards in the radial direction of the stator core (which also corresponds to the radial direction of the stator as such). Furthermore, the cross section may comprise flanks connected at a tip. Said tip may suitably be a rounded tip to allow a smooth flow of cooling liquid thereover. Alternatively, the tip may have other shapes, such as a sharp tip, a dual-peaked tip, or a double-flared tip. Modification of the shape of the tip may in some cases lead to a modification of the flow of cooling liquid thereover, which in turn, for example, may influence the thermal energy transfer within the cooling liquid. The flanks may for example be substantially straight. Alternatively, the flanks may have a slight curvature, such as slightly concave or slightly convex. In order to obtain a tapered cross section, the flanks may suitably be angled relative to a radius of the stator core.

The plurality of ribs may suitably have a cross section, as seen perpendicular to the central axis, which is symmetric about a radius of the stator core. It is however also possible that the cross section is non-symmetrical about a radius of the stator core. For example, the flanks of the cross section may be angled differently, if desired. As seen relative to the circumferential flow of cooling liquid, each of the plurality of ribs comprises a downstream flank and an upstream flank. At least the upstream flank may suitably be angled with an angle of from 20° to 60° relative to a stator core radius passing through an outermost part of the tip of the relevant rib. This further facilitates the flow of cooling liquid over the rib and reduces the risk for entrapment of possible air bubbles that may be introduced into the substantially annular gap with the cooling liquid. Preferably, the upstream flank may be angled with an angle of from 25° to 45° relative to the stator core radius passing through the outermost part of the tip of the relevant rib.

Moreover, the plurality of ribs may be distributed circumferentially so that a distance between the tips of two adjacently arranged ribs (of the plurality of ribs) is from 1 to 3 times the width of the base of each of said two adjacently arranged ribs. This has, among other things, the advantage of significantly increasing the surface area of the radially outer surface of the stator core, as compared to a smooth and uniform outer surface, while allowing good flow dynamics. According to one embodiment, the distance between tips of two adjacently arranged ribs may be from 1.5 to 2.5 times the width of the base of each of said two adjacently arranged ribs.

The ratio of a radial height of each of the plurality of ribs to a maximum radial distance between the radially outer surface of the stator core and the inner wall of the housing may suitably be from 0.4 to 0.7. The radial height of a rib is its height from its base, where it is connected to the stator core, to its tip as seen along a radius of the stator core. Moreover, the maximum radial distance between the radially outer surface of the stator core and the inner wall of the housing is the distance between a position on the radially outer surface, circumferentially midway between two adjacent ribs, to the inner wall of the housing as seen along a radius of the stator core. This ratio allows for good flow dynamics of the cooling liquid and allows for a low pressure drop, which in turn contributes to improved overall efficiency of the electric motor. Preferably, the ratio of the radial height of each of the plurality of ribs to the maximum radial distance between the radially outer surface of the stator core and the inner wall of the housing may be from 0.50 to 0.65.

A ratio of the radial height to the width of the base of the rib may for example be from 0.3 to 0.5. Moreover, each of the ribs may have a rounded tip having a radius of curvature that is from 0.4 to 0.8 times the radial height of said rib. Preferably, the radius of curvature of the rounded tip may be from 0.5 to 0.7 times the radial height of the rib.

According to one embodiment of the herein described electric motor, the outer surface of the stator core may, in addition to the plurality of ribs described above, further comprise surface features configured to further increase the surface area of the outer surface of the stator core. Thus, the present disclosure is not limited to an electric motor in which the increase in surface area of the radially outer surface of the stator core, for the purpose of increasing the cooling capacity, is only achieved by the above described plurality of ribs.

In view of the improved cooling capacity of the herein described electric motor, it is suitable for use in applications with very high power density demands. For example, it is suitable for use as a propulsion unit in heavy-duty or medium-duty vehicles. Thus, the present disclosure also relates to a vehicle comprising the herein described electric motor.

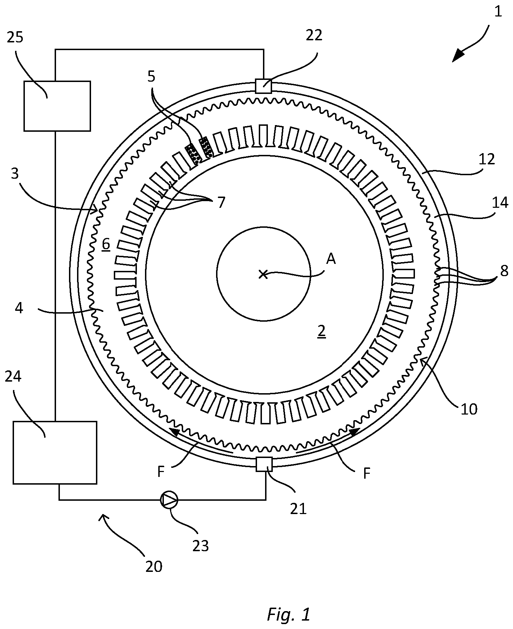

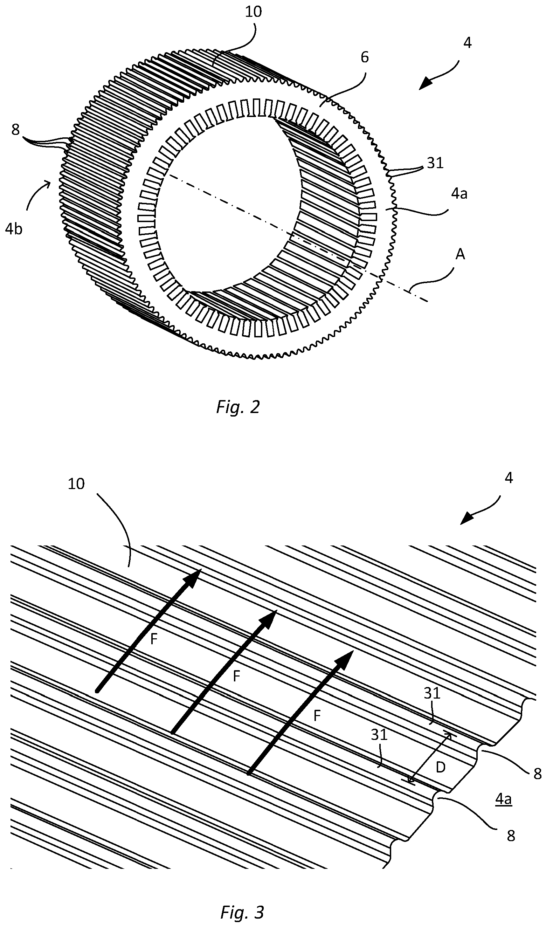

Figure 1 schematically illustrates a cross sectional view, perpendicular to the central axis A, of one exemplifying embodiment of the herein described electric motor 1. The electric motor comprises a rotor 2 rotatably arranged about the central axis A of the electric motor. The electric motor 1 further comprises a stator 3 coaxial with the rotor 2 and arranged radially outside of the rotor 2. The stator 3 comprises a stator core 4 and stator windings 5 (only shown in part for sake of clarity). The stator core 4 in turn comprises a stator back 6 and a plurality of stator teeth 7. Moreover, a radially outer surface 10 of the stator core 4 comprises a plurality of ribs 8. As shown in the figure, the ribs 8 are distributed circumferentially. The plurality of ribs 8 protrude radially outward from the stator back 6 of the stator core 4, and have a cross section that tapers in the direction from the center axis A. Moreover, the ribs 8 extend longitudinally between axial ends of the stator core 4 (see Figure 2).

The electric motor 1 further comprises a housing 12 arranged radially outside of the stator 3. At least an inner wall of the housing 12 may suitably be coaxial with the stator 3. A substantially annular gap 14 is formed between the radially outer surface 10 of the stator core 4 and the inner wall of the housing 12.

It should here be noted that although Figure 1 illustrates an electric motor 1 where the stator core 4 has a substantially circular outer surface, the present disclosure is not limited thereto. For example, the stator core 4 may comprise axially extending through-holes through which mounting rods, or the like, may extend to allow mounting the stator core fixedly to the housing 12 of the electric motor 1. Such through-holes may be arranged in corresponding protrusions that protrude radially outward from the stator back 6.

Moreover, the electric motor 1 comprises a cooling system 20 configured to cool the stator core 4 by means of a cooling liquid, such as oil. More specifically, the cooling system 20 is configured to create a circumferential flow of cooling liquid in the substantially annular gap 14 formed between the radially outer surface 10 of the stator core 4 and the housing 12. Said circumferential flow is in the figure illustrated by the arrows F. The cooling system 20 may be configured to create a circumferential flow in a substantially counter-gravity direction. This may in turn be achieved by introducing the cooling liquid from below and allow it to flow both clockwise and counterclockwise about the radially outer surface 10 of the stator core 4, as shown in the figure.

The cooling system 20 may comprise an inlet 21 through which the cooling liquid may be introduced into the substantially annular gap 14, and an outlet 22 through which cooling liquid may exit the substantially annular gap 14. Each of the inlet 21 and the outlet 22 may suitably be in the form of a manifold extending along substantially the full axial extension of the stator core 4. Furthermore, the inlet 21 and the outlet 22 may suitably be arranged diametrically opposite each other with respect to the stator 3, as shown in the figure. The cooling system 20 suitably further comprises a pump 23 configured to pressurize the cooling liquid before it is introduced into the substantially annular gap 14 via the inlet. Thereby, the cooling liquid will be forced from the inlet 21 to the outlet 22. The cooling system 20 may also comprise a reservoir 24 in which cooling liquid leaving the substantially annular gap 14 via the outlet 22 may be collected and from which cooling liquid may be pumped to the inlet 21 by means of the pump 23. Moreover, the cooling system 20 may suitably comprise a heat exchanger 25 configured to reduce the temperature of the cooling liquid. Such a heat exchanger 25 may be arranged upstream of the reservoir 24 as shown in the figure, but the present disclosure is not limited thereto.

Figure 2 illustrates a perspective view of the stator core 4 of the electric motor 1 shown in Figure 1. As is clearly shown in the figure, the plurality of ribs extend longitudinally between a first axial end 4a to an opposing second axial end 4b of the stator core 4. Moreover, according to the first exemplifying embodiment, the plurality of ribs 8 extend longitudinally in parallel with the central axis A.

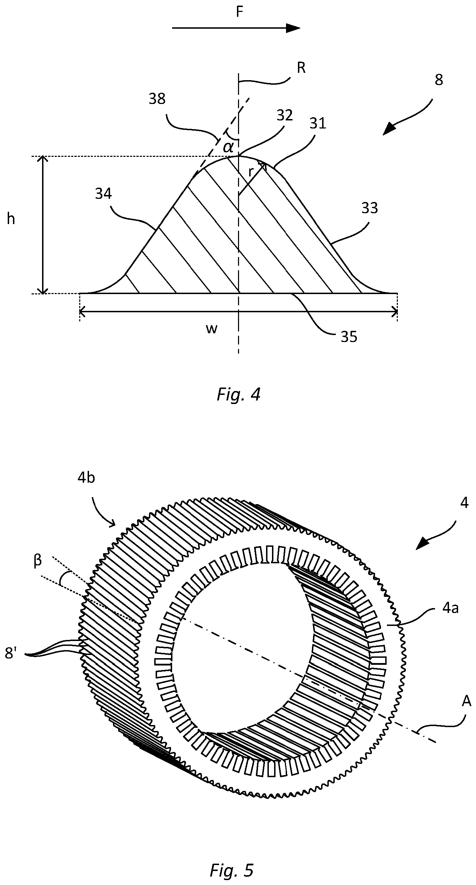

As can be seen from Figures 1 and 2, the ribs 8 have a cross section, as seen perpendicular to the central axis A, that tapers away from the central axis A. Furthermore, the ribs 8 are, in accordance with the first exemplifying embodiment of the herein described electric motor 1, arranged directly adjacent to each other as seen in the circumferential direction of the outer surface 10 of the stator core 4. In other words, the distance between the tips 31 of two adjacently arranged ribs 8 of said plurality of ribs 8 is about the same as a width of a base (cf. Figure 4) of each of the adjacently arranged ribs 8.

Figure 3 illustrates a perspective view of a portion of a radially outer surface 10 of a stator core 4 according to a second exemplifying embodiment of the herein described electrical motor 1. More specifically, the perspective view is seen from the first axial end 4a of the stator core 4. The stator core 4 according to the second exemplifying embodiment corresponds to the stator core 4 shown in Figures 1 and 2, except that the plurality of ribs 8 are not arranged directly adjacent to each other as seen in a circumferential direction of the radially outer surface 10 of the stator core 4. Instead, the ribs are circumferentially distributed such that a distance D between tips 31 of two adjacently arranged ribs 8 (of the plurality of ribs) is greater than the width of a base (cf. Figure 4) of each of said two adjacently arranged ribs 8. Said distance may for example be up to 3 times the width of a base of each of said two adjacently arranged ribs 8. The surface area, and thus the heat transfer ability between the stator core 4 and the cooling liquid, increases with reduced distance D between adjacent ribs 8. It is therefore advantageous if the ribs are arranged as close as possible to each other. However, it may in some cases be suitable to increase the distance D between the ribs 8 for practical reasons, for example due to practical reasons during production of the stator core 4.

Figure 3 further illustrates the circumferential flow of cooling liquid, created by the cooling system of the electric motor, by means of the arrows F. As can be seen from the figure, the cooling liquid flows over the radially outer surface 10 of the stator core in a direction which is substantially perpendicular to the longitudinal extension of the ribs 8. Thereby, the cooling capacity of the stator, and thus also the electric motor as a whole, may be increased without significantly increasing the pressure drop. This in turn means that less pump work is needed for a desired flow rate of the cooling liquid, and thereby also improved overall energy efficiency of the electric motor.

Figure 4 illustrates an exemplifying cross section, as seen perpendicular to the central axis, of a rib 8 (such as any one of the plurality of ribs 8 shown in Figures 1-3) of the radially outer surface of a stator core of the herein described electric motor. As can be seen from the figure, the rib 8 has a cross section that is tapered. More specifically, the exemplified cross section comprises a first flank 33 and a second flank 34 connected via a rounded tip 31. Each of the first and second flanks 33, 34 are angled with respect to a radius R of the stator 3 (which also corresponds to the radius of the stator core 4). As seen in the flow direction F of the circumferential flow of cooling liquid passing the rib 8, the first flank 33 constitutes a downstream flank of the rib whereas the second flank 34 constitutes an upstream flank of the rib 8. The rib 8 may be symmetric about a radius R of the stator core, as shown in the figure, but the present disclosure is not limited thereto. At least the upstream flank 34 may suitably be angled with an angle α of from 20° to 60° relative to the stator core radius R passing through the outermost part 32 of the tip 31 of the rib 8. In other words, an angle α between a tangent 38 of the upstream flank 34 and the radius R of the stator core 4 may be from 20° to 60° . This facilitates the flow of cooling liquid over the rib 8 and facilitates flushing of possible air bubbles to avoid entrapment thereof.

The rib 8 has a base 35 forming the connection of the rib 8 to the remainder of the stator core (more specifically, the stator back of the stator core). The base 35 has a width w as seen in the circumferential direction of the radially outer surface of the stator core. Moreover, the rib 8 has a radial height h (i.e. an extension along the radius R of the stator core) between its base 35 and an outermost part 32 of the rounded tip 31. A ratio of the radial height to the width w of the base of the rib may for example be from 0.3 to 0.5, but is not limited thereto. Moreover, as previously mentioned, the cross section of the rib 8 comprises a rounded tip 31. Said tip may suitably have a radius of curvature r that is from 0.4 to 0.8 times the radial height h of the rib 8.

Suitably, the radial height h of the rib 8 may be such that a ratio of the radial height h of the rib to a maximum radial distance between the radially outer surface 10 of the stator core 4 and the inner wall of the housing is from 0.4 to 0.7. The same naturally applies to each of the plurality of ribs present on the radially outer surface of the stator core 4. Said maximum radial distance between the radially outer surface 10 of the stator core 4 and the inner wall of the housing 12 may typically be present midway between two adjacently arranged ribs 8.

Figure 5 illustrates a perspective view of a stator core 4 according to a third exemplifying embodiment of the herein described electric motor. The stator core 4 shown in Figure 5 corresponds to the stator core 4 shown in Figure 2, except that is comprises helical ribs 8' instead of ribs extending longitudinally in parallel with the central axis A. The helical ribs 8' have a helix angle β which may suitably be equal to or less than 20°, since greater helix angles may in some cases negatively affect the circumferential flow of cooling liquid. A helix angle β is the angle between the longitudinal extension of a rib 8' and a line parallel to the central axis A, as shown in the figure. By means of helical ribs, the surface area of the radially outer surface of the stator core 4 may be further increased, which in turn may further increase the cooling capacity of the stator core 4.

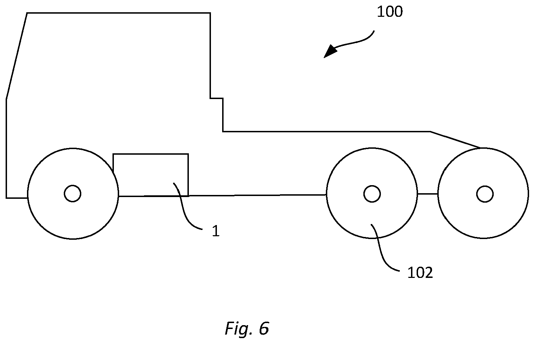

Figure 6 schematically illustrates a side view of an example of a vehicle 100, here illustrated as a truck. The vehicle 100 may comprise the electric motor 1 as described herein. The electric motor 1 may suitably be arranged in a powertrain (not illustrated) of the vehicle 100. More specifically, the electric motor 1 may be configured to serve as a propulsion unit of the vehicle 100, and thus be configured to provide motive power to one or more drive wheels 102 of the vehicle 100.

## Claims

1. An electric motor (1) having a central axis (A) and comprising:
a rotor (2) rotatably arranged about the central axis (A),
a stator (3) coaxial with the rotor (2), the stator (3) comprising a stator core (4) having a radially outer surface (10) comprising a plurality of ribs (8, 8') distributed circumferentially and extending longitudinally between axial ends (4a, 4b) of the stator core (4),
a housing (12) arranged radially outside the stator (3) such that a substantially annular gap (14) is formed between the outer surface (10) of the stator core (4) and an inner wall of the housing (12), and
a cooling system (20) configured to create a circumferential flow (F) of a cooling liquid in the substantially annular gap (14).

2. The electric motor (1) according to claim 1, wherein each of the plurality of ribs (8, 8') has a cross section, perpendicular to the central axis (A), that is tapered.

3. The electric motor (1) according to claim 2, wherein said cross section comprises angled flanks (33, 34) connected via a rounded tip (31).

4. The electric motor (1) according to any one of the preceding claims, wherein each of the plurality of ribs (8, 8') has a downstream flank (33) and an upstream flank (34), relative to the circumferential flow (F) of cooling liquid, and wherein said upstream flank (34) is angled with an angle (α) of from 20° to 60°, relative to a stator core radius (R) at an outermost part (32) of a tip (31) of the rib (8, 8'); preferably with an angle (α) of from 25° to 45°.

5. The electric motor (1) according to any one of the preceding claims, wherein each of the plurality of ribs (8, 8') has a cross section, perpendicular to the central axis (A), which is symmetric about a radius (R) of the stator.

6. The electric motor (1) according to any one of the preceding claims, wherein a distance (D) between tips (31) of two adjacently arranged ribs (8, 8') of said plurality of ribs (8, 8') is from 1 to 3 times a width of a base of each of said two adjacently arranged ribs (8, 8').

7. The electric motor (1) according to any one of the preceding claims, wherein each of the plurality of ribs (8, 8') has a rounded tip (31) having a radius of curvature (r) that is from 0.4 to 0.8 times the radial height (h) of said rib (8, 8'); preferably from 0.5 to 0.7 times the radial height (h) of said rib (8, 8').

8. The electric motor (1) according to any one of the preceding claims, wherein a ratio of radial height (h) of each of the plurality of ribs (8, 8') to a maximum radial distance between the radially outer surface (10) of the stator core (4) and the inner wall of the housing (12) is from 0.4 to 0.7; preferably from 0.50 to 0.65.

9. The electric motor (1) according to any one of the preceding claims, wherein each of the plurality of ribs (8) extend longitudinally in parallel with the central axis (A).

10. The electric motor (1) according to any one of claims 1 to 8, wherein the plurality of ribs (8, 8') are helical ribs (8') having a helix angle (β) of equal to or less than 20 degrees; preferably equal to or less than 10 degrees.

11. The electric motor (1) according to any one of the preceding claims, wherein the cooling system (20) is configured to create a circumferential flow (F) in a substantially counter-gravity direction.

12. The electric motor (1) according to any one of the preceding claims, wherein the outer surface of the stator core, in addition to the plurality of ribs (8, 8'), further comprises a plurality of surface features configured to increase a surface area of the outer surface of the stator core.

13. A vehicle (100) comprising the electric motor (1) according to any one of the preceding claims.
